# FASCICULE DE BREVET EUROPEEN

(11) **EP 1 516 178 B1**
(45) Date de publication et mention de la délivrance du brevet: **09.12.2015**
(21) Numéro de dépôt: 03760034.3
(22) Date de dépôt: 13.06.2003
(51) Int. Cl.: G01N 29/04, G01N 29/26, B23K 31/12, G01N 29/06

(54) **Procédé de contrôle par ultrasons de joints soudés**
Verfahren zur Ultraschallkontrolle von Schweissverbindungen
Method for ultrasonic control of weld joints

(30) Priorité: 17.06.2002 FR 0207441
(43) Date de publication de la demande: 23.03.2005
(73) Titulaire: L'AIR LIQUIDE, Société Anonyme pour l'Etude et l'Exploitation des Procédés Georges Claude, 75007 Paris (FR)
(72) Inventeur: CENCE, Mario, F-71390 Saint Vallerin (FR); WASTIAUX, Sophie, F-93600 Aulnay s/Bois (FR); BARDOUX, Olivier, F-92400 Courbevoie (FR)
(74) Mandataire: Pittis, Olivier
(86) Numéro de dépôt international: PCT/FR2003/001798
(87) Numéro de publication internationale: WO 2003/106994

(56) Documents cités:
- EP-A- 0 166 666
- EP-A- 0 305 637
- EP-A- 0 816 840
- WO-A-02/31487
- WO-A-02/44709
- GB-A- 2 195 022
- GB-A- 2 198 532
- GB-A- 2 219 907
- US-A- 3 868 847
- US-A- 5 677 490
- US-A- 5 804 730
- LILLEY J ET AL: "IN-LINE INSPECTION USING TIME-OF-FLIGHT DIFFRACTION" WELDING AND METAL FABRICATION, IPC LTD. HAYWARDS HEATH, GB, vol. 59, no. 8, 1 octobre 1991 (1991-10-01), pages 457-458,460, XP000230602 ISSN: 0043-2245

## Description

La présente invention concerne un procédé pour le contrôle non destructif, par ultrasons, de matériaux et, plus particulièrement, de joints soudés réunissant, bout à bout, deux pièces métalliques, en particulier du genre plaques ou tôles.

Ce procédé permet le contrôle, en fabrication et en service, de structures et d'équipements à joints soudés, par exemple obtenus par fusion locale, et pouvant être le siège de défauts plans du genre fissure ou de défauts volumiques ; à ce titre, on utilisera ci-après indifféremment les termes "défaut" ou "fissure".

A titre d'exemples non limitatifs, le procédé selon l'invention peut se rapporter au contrôle des joints soudés des parois d'équipements ou de composants fonctionnant sous pression, appartenant à des unités chimiques ou pétrochimiques, des centrales nucléaires ou analogues, des structures de machines volantes, des éléments ou pièces de machines tournantes, ou des canalisations, en des situations qui peuvent nécessiter des contrôles et notamment des examens répétés, comme des examens avant et après traitement thermique, ou avant et après réparation, des suivis en exploitation de matériaux ou d'assemblages, des suivis d'évolution de défauts dans des équipements sous pression (tels que fissures évolutives en service), des contrôles industriels de fabrication, etc...

Une technique particulière dite 'TOFD" (Time-Of-Flight Diffraction), applicable au contrôle par ultrasons, a été développée par Mr SILK dès 1973, et se trouve décrite, par exemple, dans BRITISH STANDARD - BS 7706 : 1993, ou dans l'ouvrage de J.P. CHARLESWORTH et J.A.G. TEMPLE "Engineering Applications of Ultrasonic Time-of-Flight Diffraction" (1989-2001).

Une autre technique dite « OLI », pour Onde Longitudinale Inclinée, encore appelée technique d'ondes rampantes (Creeping Waves) est applicable au contrôle par ultrasons, et se trouve décrite, par exemple dans H. Wustenberg and A. Erhard, « Creeping Waves and Ultrasonic contol. Physical principe and application to welded join control principle », Rvue pratique de contrôle industriel ISSN 0373-8809 ; 1984, n° 127, pp 55.60.

Toutefois, aucun document n'indique, à ce jour, des moyens permettant d'assurer la détection efficace, par une échographie simple, de défauts aléatoires situés dans un volume de joints soudés compris entre 5 mm et 100 mm d'épaisseur.

En effet, les principales difficultés qui se présentent actuellement, lors d'un examen par ultrasons selon la technique "TOFD", et qui restent en attente de solutions industrielles, sont les suivantes :
- dans le cas par exemple d'un couple de traducteurs ultrasoniques en contact avec une surface non plane du composant à examiner, il est généralement nécessaire de changer de traducteur pour l'examen complet d'un joint reliant des parois d'épaisseurs comprises entre 5 mm et 100 mm.
- des fissures réelles ne sont pas toujours décelées avec les procédures classiques, mentionnant des gammes de traducteurs ou d'angles de réfraction trop floues.
- il est aussi nécessaire de changer de couple de traducteurs, pour utiliser des écarts de points d'émergence différents, et des angles de réfraction adaptés aux différentes épaisseurs, comme par exemple pour la recherche de défauts pouvant être situés à proximité de la surface de soudage ou, au contraire, au voisinage de la paroi opposée à la surface de soudage.
- pour la recherche de défauts du type fissure, il n'existe pas de critère de notation pouvant assurer à 100% la détection de fissures débouchantes ou de défauts internes susceptibles de déboucher sur la surface interne ou externe, et dont la corrélation avec un examen radiographique ait montré de meilleures performances que la technique à ultrasons.

Pour tenter de résoudre ces problèmes, des solutions ont déjà été proposées.

Ainsi, le document GB-A-2198532 a proposé un procédé d'inspection de type TOFD (pour *time-of-flight diffraction*) d'objets soudés situés sous l'eau, telles des plates-formes d'extraction pétrolière, mettant en oeuvre deux traducteurs (*transducers* en anglais) adjacents à la surface de l'objet à inspecter et espacés l'un de l'autre, en étant situés de part et d'autre du joint de soudure dans lequel les éventuelles fissures doivent être détectées.

Le document US-3,868,847 enseigne un matériel approprié pour la mise en oeuvre d'un procédé de contrôle de points soudés par ultrasons, comprenant :
- au moins un couple formé d'un premier et d'un deuxième traducteurs, l'un émetteur et l'autre récepteur d'ondes ultrasonores, lesdits traducteurs utilisant des cristaux piézoélectriques, et les deux traducteurs étant reliés mécaniquement par un support commun les maintenant à un écartement voulu et se trouvant aussi raccordés à une arrivée de liquide pour le couplage acoustique de ces traducteurs avec l'élément à contrôler, et
- des moyens de traitement des mesures, les traducteurs étant encore reliés auxdits moyens de traitement des mesures.

Par ailleurs, le document WO 02/31487 divulgue un procédé de contrôle par ultrasons de joints soudés, plus particulièrement de joints soudés réunissant bout-à-bout deux pièces métalliques, dans lequel on réalise le contrôle du joint en déplaçant le long du joint soudé à contrôler, en appliquant la technique de l'onde longitudinale incliné, au moins un couple formé d'un premier traducteur et d'un deuxième traducteur, l'un émetteur et l'autre récepteur d'ondes ultrasonores, lesdits traducteurs étant positionnés latéralement de part et d'autre du joint à contrôler, de manière à détecter tout défaut du joint situé à une épaisseur d'au plus 8-10 mm.

Cependant, les solutions proposées jusqu'à présent se sont avérées non satisfaisantes, insuffisantes ou imparfaites au plan industriel, notamment car elles ne permettaient pas une détection efficace des fissures dans les joints soudés.

La présente invention vise alors à résoudre les problèmes existants dans l'art antérieur en proposant un procédé de contrôle de joints soudés amélioré permettant de couvrir efficacement au moins la gamme d'épaisseurs comprise entre 10 mm et au moins 60 mm, en un seul passage le long du joint à inspecter, que ce soit dans le sens longitudinal ou circonférentiel, c'est-à-dire pour des joints linéaires ou circulaires (raboutage de tubes), ainsi que la gamme d'épaisseurs plus faibles, à savoir les zones proches de la surface ayant une épaisseur comprise entre 0.5 mm 5 mm, qui sont habituellement plus difficiles à inspecter.

De plus, l'invention vise aussi à permettre d'ausculter une zone d'épaisseur ou de volume plus important en utilisant un nombre raisonnable de traducteurs.

Enfin, cette invention a aussi pour but de fournir un matériel simple et autonome, adapté pour la mise en oeuvre du procédé de contrôle concerné au plan industriel.

La solution de la présente invention est alors un procédé de contrôle par ultrasons de joints soudés combinant la technique "TOFD" et la technique "OLI".

Plus précisément, l'invention porte sur un procédé de contrôle par ultrasons de joints soudés, plus particulièrement de joints soudés réunissant bout-à-bout deux pièces métalliques, dans lequel on réalise le contrôle du joint:
a) on déplace, en appliquant la technique "TOFD", dans le sens longitudinal ou circonférentiel, le long du joint soudé à contrôler, au moins un couple formé d'un premier traducteur et d'un deuxième traducteur, l'un émetteur et l'autre récepteur d'ondes ultrasonores, lesdits transducteurs étant positionnés latéralement de part et d'autre du joint à contrôler, lesdits traducteurs comprenant des céramiques ou cristaux piézoélectriques, de manière à détecter tout défaut du joint situé à une épaisseur d'au moins 10 mm, et de préférence jusqu'à 60 mm.
b) on déplace le long du joint soudé contrôler, en appliquant la technique de l'onde longitudinale inclinée ("OLI"), au moins un troisième traducteur, de manière à détecter tout défaut du joint situé à une épaisseur comprise entre 0.5 mm et 15 mm.

Selon le cas, le procédé de l'invention peut comprendre l'une ou plusieurs des caractéristiques techniques suivantes :
- à l'étape a), les premier et deuxième traducteurs comprennent des céramiques ou cristaux piézoélectriques de forme rectangulaire ou oblongue.
- à l'étape a), les traducteurs ultrasonores ont une bande de fréquence supérieure à 60 % de la fréquence centrale et une fréquence comprise entre 1 et 20 MHz, de préférence entre 6 et 18 MHz.
- il comprend le décalage latéral (D) du couple de traducteurs ultrasonores, par rapport au centre ou à l'axe du joint soudé.
- à l'étape a), on détecte tout défaut du joint situé à une épaisseur entre 10 et 300 mm, de préférence encore de 10 à 60 mm.
- à l'étape b), la technique "OLI" est mise en oeuvre par insonification d'au moins une partie du joint à contrôler avec des ondes sonores longitudinales inclinées d'un angle (β) compris entre 70 et 90°, de préférence d'environ 76° d'angle de réfraction, et/ou à une fréquence entre 1.5 et 4 MHz, en particulier de l'ordre de 2 MHz.
- l'étape b), est opérée successivement de part et d'autre du joint soudé à contrôler.
- à l'étape b), on détecte tout défaut du joint situé à une épaisseur comprise entre 0.5 mm et 20 mm, de préférence de 0.5 mm à 10 mm.
- à l'étape b), on utilise au moins un troisième traducteur comportant une céramique d'émission d'ondes permettant d'émettre des ondes sonores en direction de la soudure et d'une céramique de réception d'ondes ultra-sonores permettant de recevoir des ondes ultra-sonores.
- il comprend une phase d'étalonnage du ou des couples de traducteurs ultrasonores, à partir d'une entaille d'étalonnage de profondeur déterminée, simulant une fissure, de préférence une entaille de longueur égale à environ 10 mm et de profondeur de l'ordre de 1 mm.
- il comprend au moins une étape d'analyse d'au moins un signal reçu par un ou chaque traducteur récepteur, au cours du balayage du joint soudé, de manière à déceler tout défaut, notamment toute fissure, et préférentiellement d'en déterminer ou d'en évaluer la hauteur ou dimension.
- l'épaisseur (e) est comprise entre 5 mm et au moins 60 mm, et les pièces sont des parois d'équipements ou de composants fonctionnant sous pression, appartenant à des unités chimiques ou pétrochimiques, des centrales nucléaires ou analogues, des structures de machines volantes, des éléments ou pièces de machines tournantes, des canalisations, des rails de chemin de fer ou tout autre ensemble mécano-soudé.

De préférence, le procédé utilise des traducteurs ultrasonores de ce genre à large bande de fréquence, en particulier supérieure à 60% de la fréquence centrale, et ayant des impulsions très courtes, c'est-à-dire des fréquences élevées, comprises notamment entre 1 et 20 MHz, et de préférence entre 6 et 18 MHz.

Le procédé selon l'invention comprend encore, avantageusement, l'adaptation de l'écartement entre les deux traducteurs ultrasonores, l'un émetteur et l'autre récepteur, et/ou le décalage latéral de ce couple de traducteurs par rapport au centre du joint soudé à contrôler, pour couvrir de façon optimale, avec ce seul couple de traducteurs, un volume correspondant à l'épaisseur du joint à contrôler, et incluant éventuellement des zones adjacentes à ce joint. En particulier, le réglage d'écartement entre les deux points d'émergence est adaptable ici pour que l'écho de réflexion de la paroi opposée contrôlée soit à son amplitude voisine du maximum.

Il est clair qu'avec des paires de traducteurs plus nombreuses, le procédé permet aussi, en un seul passage, l'auscultation d'épaisseurs plus importantes, pouvant atteindre 300 mm.

On notera que la procédure de traitement prend ici en compte non seulement les informations contenues dans les signaux habituels, allant de l'onde latérale à l'écho de fond, mais aussi les informations générées par les ondes secondaires, comme les transformations de mode.

Ceci est précisément rendu possible par l'utilisation revendiquée de traducteurs à large bande (supérieure à 60% de la fréquence centrale), et ayant des fréquences élevées, de préférence comprises entre 6 et 18 MHz.

Le procédé objet de l'invention permet ainsi, de façon rapide, c'est-à-dire la détection de tout type de défaut sur l'intégralité d'un joint soudé, la hauteur des fissures étant mesurable avec une précision de ± 0,25 mm.

Pour parvenir à une telle précision, il est avantageux de procéder au préalable à une phase d'étalonnage du ou des couples de traducteurs ultrasonores servant à la mise en oeuvre du procédé TOFD, à partir d'une entaille d'étalonnage, en particulier électro-érodée, de profondeur déterminée, située sur une face d'un bloc d'étalonnage, une telle entaille artificielle simulant une fissure. Cette entaille peut notamment avoir une épaisseur comprise entre 0,5 mm et la demi épaisseur d'un bloc d'étalonnage dont l'épaisseur correspond à celle des pièces portant la soudure à examiner, voire sur l'une des pièces elles-même ; dans ce cas, elle peut être ménagée sur une face opposée à sa surface de sondage. En particulier, l'entaille peut avoir une hauteur d'environ 1 mm lorsqu'on souhaite détecter des fissures très fermées.

Le matériel selon l'invention, pour la mise en oeuvre de ce procédé, comprend :
- au moins un couple formé d'un premier et d'un deuxième traducteurs (5, 6), l'un émetteur et l'autre récepteur d'ondes ultrasonores, lesdits traducteurs (5, 6) utilisant des céramiques ou cristaux piézoélectriques (24), et les deux traducteurs (5, 6) étant reliés mécaniquement par un support commun (7) comprenant une tringlerie (16, 17) agencée pour permettre un réglage de l'écartement (E) entre ces deux traducteurs ultrasonores (5, 6), un montage pivotant (axes 19, 20) de chaque traducteur (5, 6), avec moyens de blocage (21, 22) dans une position angulaire choisie, et se trouvant aussi raccordés à une arrivée (15, 30 à 33) de liquide, en particulier d'eau, pour le couplage acoustique de ces traducteurs (5, 6) avec l'élément à contrôler (1, 2, 3),
- au moins un troisième traducteur (57, 53, 54, 55), et
- des moyens de traitement (8) des mesures, les traducteurs étant encore reliés auxdits moyens de traitement (8) des mesures.

Selon le cas, le matériel de l'invention peut comprendre l'une ou plusieurs des caractéristiques techniques suivantes :
- le support commun des deux traducteurs ultrasonores possède un montage permettant un décalage latéral (D) du couple de traducteurs par rapport au centre du joint soudé à contrôler.
- ledit troisième traducteur comporte une céramique d'émission d'ondes permettant d'émettre des ondes sonores et d'une céramique de réception d'ondes sonores permettant de recevoir des ondes sonores.
- le support commun des deux traducteurs TOFD, l'un émetteur et l'autre récepteur des ondes ultrasonores, comprend une tringlerie agencée pour permettre un réglage de l'écartement entre ces deux traducteurs ultrasonores. Avantageusement, la tringlerie de support des deux traducteurs ultrasonores comprend encore un montage pivotant de chaque traducteur, avec moyens de blocage dans une position angulaire choisie, ce qui permet l'ajustement du contact des traducteurs sur une surface de planéité imparfaite,
ou l'adaptation de leur inclinaison en fonction du rayon de courbure de l'élément à contrôler, si celui-ci présente une surface courbe, par exemple cylindrique. Pour optimiser le balayage du joint soudé à contrôler, le support commun des deux traducteurs ultrasonores peut, en outre, posséder un montage permettant un décalage latéral du couple de traducteurs, par rapport au centre du joint soudé à contrôler.

Quant aux moyens de traitement des mesures, ceux-ci peuvent être réalisés selon des techniques connues dans le domaine des appareils de mesure et de contrôle à ultrasons. En particulier, les mesures effectuées peuvent faire l'objet d'une mémorisation et d'un stockage, pour être traitées ultérieurement par un logiciel ou par des calculs spécifiques, visant à former et visualiser des images dites "A-SCAN" et/ou "B-SCAN", et à extraire de ces images les anomalies ou autres signes discriminatoires de défauts des joints soudés contrôlés, afin d'aboutir à une interprétation visuelle en temps réel ou en temps différé, par analyse du signal en mode automatique.

Une bibliothèque d'images-types peut aider ici les opérateurs à prendre des décisions sur les compléments d'examen à réaliser, et/ou à effectuer un diagnostic sur la nature des défauts mis en évidence. Un logiciel spécifique peut aussi fournir ici des moyens complémentaires pour statuer sur un type de défaut décelé, en particulier sur le caractère volumique ou non du défaut analysé.

Par ailleurs, une méthode d'analyse du type "cascade", préconisée par les normes, peut aussi être utilisée.

L'invention sera mieux comprise à l'aide de la description qui suit, faite en références aux figures annexées représentant, à titre d'exemples non limitatifs, une forme d'exécution du matériel de l'invention servant à la mise en oeuvre du procédé de l'invention, parmi lesquelles :
- la Figure 1 est un schéma de principe très simplifié de l'étape d'insonification par la technique TOFD de l'invention ;
- la Figure 2 est un schéma synoptique du matériel objet de l'invention ;
- la Figure 3 est une vue de face de la partie "acquisition" de ce matériel ;
- la Figure 4 est une vue en plan par dessus, correspondant à la figure 3 ;
- la Figure 5 est une vue similaire à la figure 3, illustrant le décalage latéral des traducteurs utilisés pour la mise en oeuvre de la technique TOFD ;
- la Figure 6 est une autre vue similaire à la figure 3, illustrant l'adaptation dudit matériel à un élément à contrôler possédant un rayon de courbure,
- les Figures 7 et 8 sont des schémas de principe de mise en oeuvre de la technique "OLI" (ondes longitudinales inclinées) ;
- la Figure 9 schématise une détection TDOF d'une soudure de largeur importante ;
- la Figure 10 schématise le principe de la combinaison d'une détection TOFD et d'une détection OLI selon l'invention.

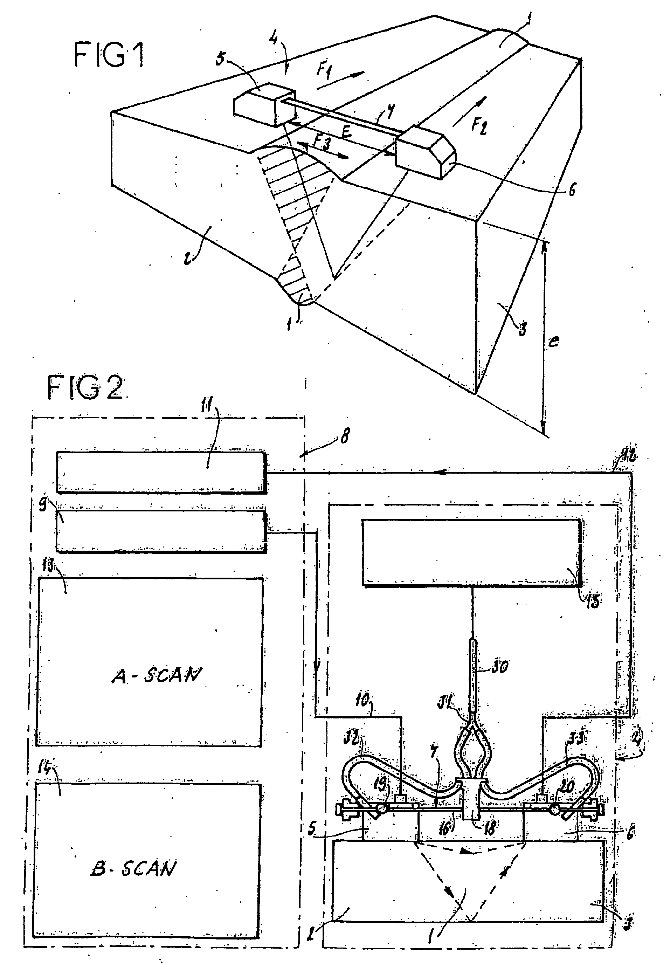

Comme l'illustre la figure 1, l'invention porte sur le contrôle TOFD d'un joint soudé 1, qui réunit bout à bout deux pièces métalliques 2, 3, telles des plaques, en particulier avec bords chanfreinés, l'ensemble possédant une épaisseur e donnée, typiquement comprise entre 5 mm et 100 mm.

Le matériel de mise en oeuvre du procédé de manière à contrôler le joint soudé 1 et les zones adjacentes, notamment pour détecter d'éventuels défauts du genre fissure, est amené et déplacé le long du joint à inspecter, c'est-à-dire sur une face de l'ensemble constitué par le joint soudé 1 et les deux pièces 2, 3 soudées l'une à l'autre.

Ce matériel comprend, en tant que partie générale d' "acquisition" 4, essentiellement deux traducteurs 5, 6, l'un émetteur et l'autre récepteur d'ondes ultrasonores, reliés entre eux par une tringlerie 7 qui les maintient à un écartement E.

Les deux traducteurs 5, 6 sont placés respectivement au-dessus des bords des deux pièces 2, 3, et de part et d'autre du joint soudé 1, la tringlerie 7 chevauchant ce joint 1 en s'étendant transversalement à celui-ci.

Ces traducteurs 5 et 6 sont déplacés le long du joint en effectuant un balayage, selon les flèches F1 et F2, parallèlement à la direction longitudinale du joint soudé 1, un seul balayage suffisant ici pour ausculter la totalité de ce joint soudé 1.

De préférence, comme l'indique la double flèche F3, il est aussi prévu de pouvoir modifier l'écartement E entre les deux traducteurs 5, 6 et/ou de décaler latéralement ces deux traducteurs 5, 6 pour adapter le matériel aux particularités de chaque joint soudé 1 et augmenter ainsi les possibilités de ce matériel.

La figure 2 est un schéma synoptique du matériel montrant à droite sa partie "acquisition" 4, avec les deux traducteurs 5, 6 reliés par la tringlerie 7, et à gauche la partie électronique 8, qui est reliée à la partie "acquisition" 4 et qui assure notamment le traitement et la visualisation des mesures effectuées.

La partie électronique 8 comprend un émetteur ultrasonore 9, relié en 10 au traducteur 5 émetteur d'ondes ultrasonores, ainsi qu'un récepteur ultrasonore 11 relié en 12 au traducteur 6 récepteur d'ondes ultrasonores.

Des moyens de visualisation 13, 14, respectivement pour images dites "A-SCAN" et "B-SCAN", sont prévus sur la partie électronique 8.

La partie "acquisition" 4 comprend encore un système autonome d'alimentation en eau sous pression, schématisé en 15, raccordé par des tubes (détaillés ci-après) aux deux traducteurs 5, 6.

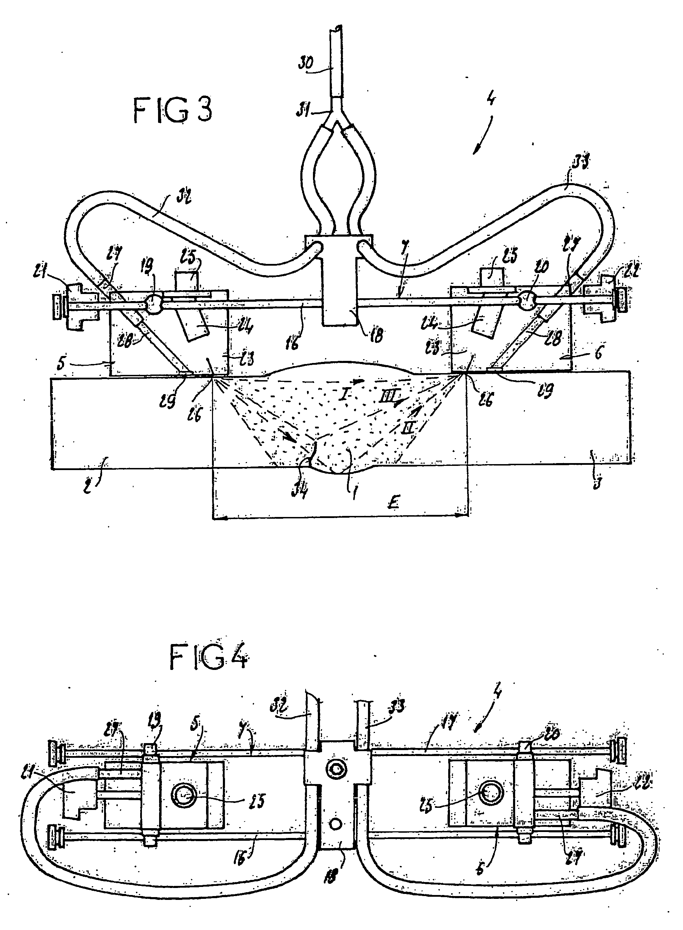

Les figures 3 et suivantes représentent, plus en détail, la structure de la partie "acquisition" 4.

La tringlerie 7 se compose de deux tiges rectilignes parallèles 16 et 17, tenues par un support central commun 18. Sur ces tiges 16 et 17 sont montés coulissants, de part et d'autre du support central 18, deux axes transversaux 19 et 20. Le premier axe transversal 19 sert de support au traducteur 5 et le second axe transversal 20 sert de support à l'autre traducteur 6, la disposition étant symétrique.

Chaque traducteur 5 ou 6 est ainsi monté mobile en translation le long des tiges 16 et 17 de la tringlerie 7, ce qui permet de régler l'écartement E entre les deux traducteurs 5 et 6.

De plus, l'inclinaison des deux traducteurs 5, 6 est réglable, par pivotement autour des axes respectifs 19 et 20. Des vis de blocage respectives 21 et 22 sont prévues pour l'immobilisation des deux traducteurs 5 et 6 dans les positions angulaires choisies.

Dans le détail, chaque traducteur 5 ou 6 comprend :
- un corps 23 traversé par l'axe 19 ou 20, et pourvu d'un trou taraudé recevant la vis de blocage 21 ou 22 ;
- un bloc 24 inséré dans le corps 23, et réunissant un élément piézoélectrique et son amortisseur ;
- sur la face supérieure du corps 23, un connecteur 25 pour l'élément piézoélectrique 24 (pour le raccordement de la liaison 10 ou 12) ;
- sur la face inférieure du corps 23, un point d'émergence 26 du faisceau ultrasonore ;
- un raccord d'arrivée d'eau 27 relié, par un canal 28 interne au corps 23, à une sortie d'eau 29 située sur la face inférieure dudit corps 23.

Par ailleurs, le système d'alimentation en eau sous pression 15 comporte un tube commun 30 aboutissant à un "Y" de répartition 31, d'où partent deux tubes souples 32, 33 qui aboutissent respectivement aux deux traducteurs 5, 6, plus particulièrement au raccord d'arrivée d'eau 27 de chaque traducteur. Ainsi est réalisé, au moyen d'une lame d'eau, le couplage acoustique entre chaque traducteur 5 ou 6 et l'élément à contrôler sur lequel est appliqué ce traducteur.

Les éléments piézoélectriques 24 des deux traducteurs 5 et 6 sont des céramiques piézoélectriques rectangulaires ou oblongues, par exemple de 6 x 4 mm, fonctionnant en ondes longitudinales avec faisceau acoustique pouvant aller de 30° à 80°, de préférence de 50° à 70°.

Les fréquences de fonctionnement sont, quant à elles, comprises entre 1 et 20 MHz, de préférence entre 6 et 18 MHz, et plus préférentiellement encore entre 6.5 MHz et 8.5 MHz pour les épaisseurs de moins de 10 mm ou entre 15 et 20 MHz, de préférence de l'ordre de 18MHz pour les épaisseurs de moins de 10 mm, et/ou avec une largeur de bande associée de 75% ± 25% par rapport à la fréquence centrale à -6 dB.

On peut en fait utiliser des céramiques rectangulaires de longueur comprise entre 5 et 20 mm et de largeur comprise entre 2 et 8 mm.

Utiliser des céramiques oblongues ou rectangulaires permet d'obtenir une forte divergence du faisceau ultrasonore et donc d'insonifier la totalité du volume à inspecter.

On peut utiliser par exemple des traducteurs TOFD référencés 5-60 OL 55, commercialisés par la société METALSCAN.

A titre d'exemple, un faisceau acoustique de 30 à 65° est utilisable pour inspecter des gammes d'épaisseur entre 10 et 300 mm. Un angle de réfraction dans l'acier de l'ordre de 53 à 58°, de préférence d'environ 55°, est ainsi recommandé pour une épaisseur de joint comprise entre 5 et 60 mm.

En utilisation, comme l'illustre la figue 3, l'écartement E des deux traducteurs 5, 6, plus particulièrement de leurs points d'émergence 26 respectifs, est ajusté en fonction de la largeur et de l'épaisseur du joint soudé 1.

On a indiqué en I le trajet ultrasonore de l'onde latérale, et en II le trajet de l'écho de fond, le volume "insonifié" ayant été grisé.

Si une fissure 34 est présente dans ce volume, l'extrémité de la fissure 34 se comporte comme une source secondaire d'ondes sphériques (ondes diffractées).

On a encore indiqué en III le trajet ultrasonore de l'écho de diffraction, au sommet de la fissure 34.

L'analyse du signal reçu par le traducteur 6 récepteur, au cours du balayage du joint soudé 1, permet de déceler une telle fissure 34 et d'en mesurer la hauteur.

En réception, un préamplificateur à pile de 24 dB peut être utilisé pour améliorer le rapport "signal sur bruit".

La représentation des signaux reçus peut être notamment affichée en 14, en mode "B-SCAN redressé", c'est-à-dire avec un affichage du temps en fonction de l'amplitude du signal.

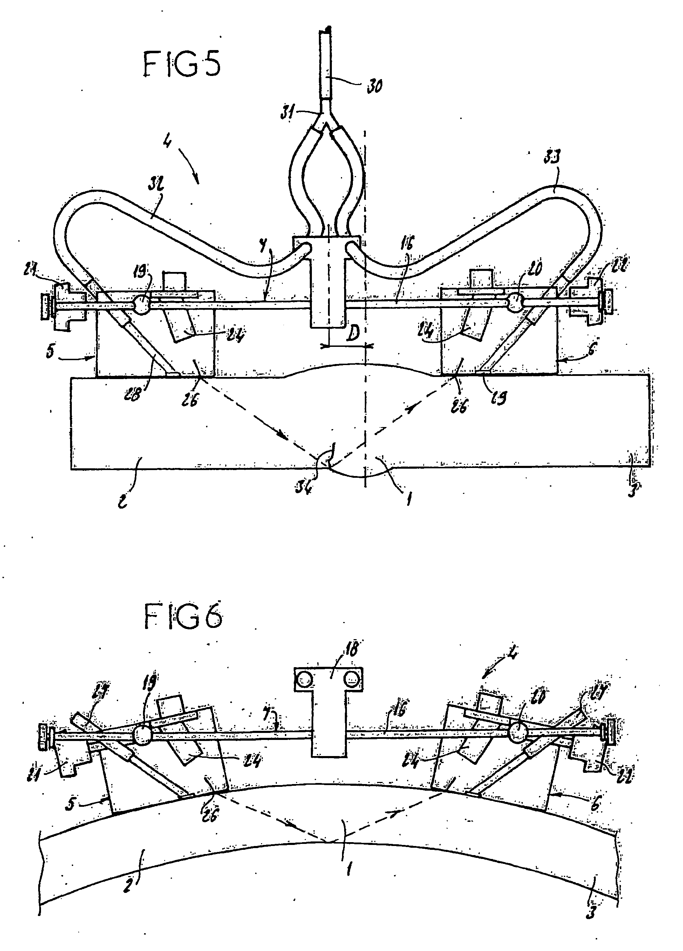

Comme l'illustre la figure 5, un décalage latéral D de l'ensemble des deux traducteurs 5, 6, d'un côté ou de l'autre du centre du joint soudé 1, peut faciliter la recherche de défauts en bordure de ce joint soudé 1.

Enfin, comme illustré par la figure 6, le réglage de l'inclinaison des deux traducteurs 5, 6 permet d'adapter le matériel à un élément à contrôler qui possède un rayon de courbure plus ou moins grand.

Selon l'invention, il est très important de prévoir une phase d'étalonnage du ou des couples de traducteurs ultrasonores 5, 6, à partir d'une entaille électro-érodée de profondeur déterminée, simulant une fissure.

En effet, sans cette étape préalable d'étalonnage, une détection efficace des fissures dans le joint peut être compromise.

Selon l'invention, la détection par la technique TOFD décrite ci-dessus est combinée avec une détection selon la technique dite OLI, pour Onde Longitudinale Inclinée, encore appelée technique d'ondes rampantes (*Creeping Waves*).

En effet, une telle combinaison TOFD/OLI est particulièrement avantageuse car elle permet une détection efficace des fissures avec un appareil à 3 voies de contrôle, c'est-à-dire à trois traducteurs, et ce, non seulement des défauts, telles les fissures, de plus de 5 mm de profondeur mais aussi de celles de moins de 5 mm de profondeur qui sont parfois masquées par l'onde latérale, lors d'un examen en technique TOFD seule.

Pour ce faire, on utilise au moins 3 traducteurs de manière à couvrir totalement la totalité du volume insonifié.

Toutefois, il est possible d'utiliser plus de 3 traducteurs de manière à affiner et/ou à améliorer encore davantage la détection, par exemple des traducteurs TOFD à angles différents ou des traducteurs à ondes transversales dites de "cisaillement".

Comme précédemment, l'analyse des signaux se fait alors par imagerie de type A-SCAN, B-SCAN, C-SCAN et/ou D-SCAN au moyen d'un système de filtrage, en temps réel ou différé, ou d'un système de calcul apte à extraire une caractérisation de l'indication mis en évidence. Préférentiellement, on utilise le logiciel VENUS de la société METALSCAN qui produit des représentations des signaux en mode B-SCAN ou D-SCAN à partir d'un signal haute fréquence (HF) ou le logiciel MIDAS de la société TECNATOM ou tout autre logiciel équivalent.

Les composants fréquentielles des signaux enregistrés peuvent être, en outre, mesurés par analyse de la transformée de Fourrier.

En fait, la technique OLI permet de détecter les défauts de surface, débouchant ou non-débouchant à la surface, jusqu'à une profondeur allant, selon les cas, jusqu'à de 0.5 mm environ à 18 mm, ce qui permet de compléter efficacement la zone d'épaisseur dont l'examen ne s'avère pas toujours optimal avec la technique TOFD.

Une telle combinaison des techniques TOFD/OLI n'a jamais été décrite jusqu'à présent et est particulièrement avantageuse au plan industriel et ce, d'autant plus qu'on précède l'examen d'une phase d'étalonnage, car cette combinaison TOFD/OLI permet de mettre en évidence des défauts de type volumique ou non-volumique dans les joints soudés sur la quasi-totalité de leur épaisseur, c'est-à-dire du volume insonifié, que ce soit à proximité de la surface (0.5 mm à 18 mm) ou plus en profondeur dans le joint (au-delà de 18 et jusqu'à 300 mm).

En pratique, la taille minimale des discontinuités et autres fissures détectables efficacement par les techniques TOFD et OLI est de l'ordre de 0.5 mm, alors que la taille maximale correspond à une fissure traversante, c'est-à-dire selon toute l'épaisseur du joint.

Préférentiellement, la technique OLI est mise en oeuvre pour contrôler des fissures de moins de 5 mm, situées du côté de la face de sondage, par insonification avec des ondes longitudinales inclinées entre 70 et 90°, de préférence d'environ 76° d'angle de réfraction, et à une fréquence entre 1.5 et 4 MHz, par exemple de l'ordre de 2 MHz.

La ou les céramiques utilisées pour la mise en oeuvre de la technique OLI sont préférentiellement rectangulaires, par exemple de 5 x 10 mm, et les deux céramiques formant un traducteur fonctionnant en émission et réception séparée et/ou pour un ange de toit (*roof angle)* compris entre 5 et 15°, de préférence de l'ordre de 10°.

On peut utiliser des traducteurs standards de type FIDM 76-2 commercialisées par la société METALSCAN.

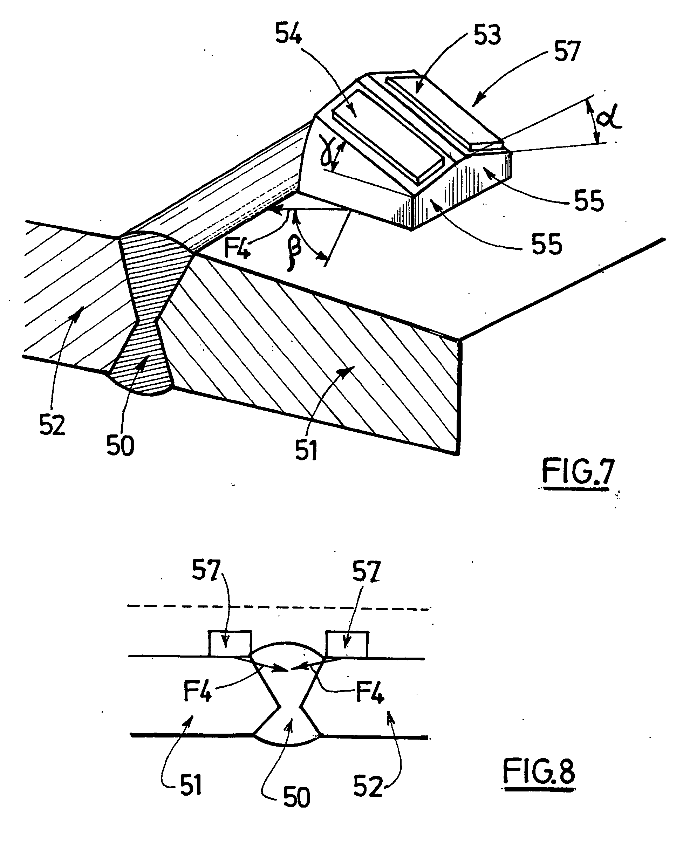

La figure 7 schématise un traducteur 57 utilisable pour mettre en oeuvre la technique OLI de manière à émettre des ondes longitudinales inclinées (flèche F4) servant à détecter des défauts à faible épaisseur dans un joint 50 de soudure unissant deux pièces métalliques 51, 52.

Le traducteur 57 se compose d'une céramique d'émission 53 d'ondes longitudinales et d'une céramique de réception 54 d'ondes sonores portées l'une et l'autre par un sabot 55 incliné, par exemple en plexiglas ou analogue, lequel forme un angle d'environ 27° (± 2°) avec la surface de la pièce dans le plan d'incidence.

L'angle α de toit des céramiques 53, 54 est compris entre 5 et 15°, de préférence de l'ordre de 10°.

Les ondes sonores longitudinales réfractées sont envoyées dans le sens de la flèche F4 vers le joint de soudure 50 selon un angle β de l'ordre de 76° par rapport à la surface de la pièce.

L'angle γ est compris entre 26 et 29° et correspond à l'angle d'incidence de la semelle usinée en plexiglas.

Comme montré sur la figure 8, le traducteur 57 est passé successivement de part et d'autre du joint de soudure 50 et les ondes sonores longitudinales sont envoyées selon l'angle β de 76° et à une fréquence de 2 MHz, ce qui permet d'insonifier la totalité du volume supérieur du joint soudé 50.

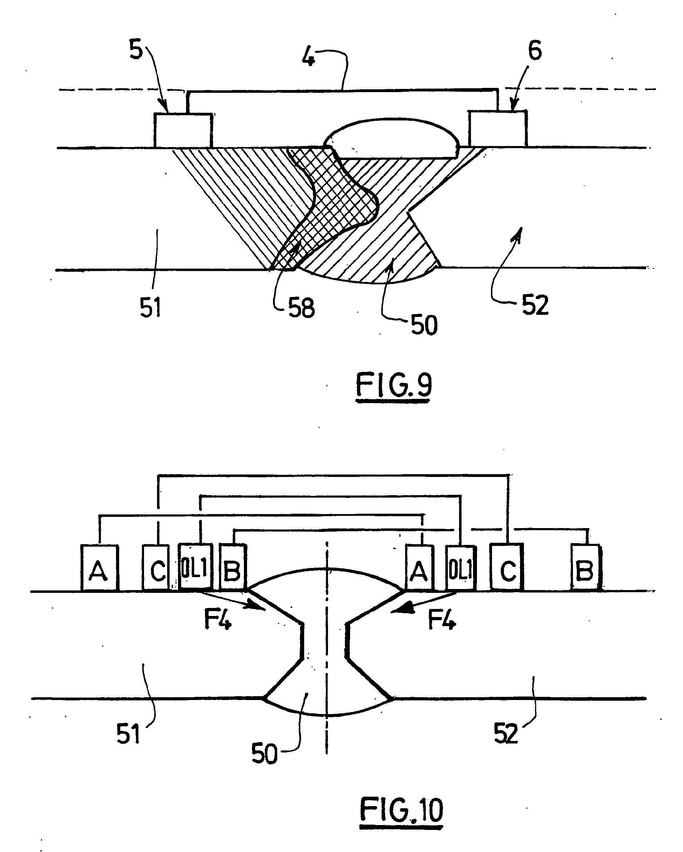

Lorsque le joint 50 présente une largeur trop importante, on peut compléter l'inspection par des passages décalés en modes TOFD comme schématisé en Figure 9 au moyen du dispositif à traducteurs 5, 6 de la Figure 1, ce qui permet de couvrir toute la largeur à inspecter, c'est-à-dire toute la zone 58 affectée thermiquement durant le soudage.

La Figure 10 schématise le principe de la combinaison d'une détection TDOF et d'une détection OLI selon l'invention d'une soudure 50 entre deux pièces 51, 52.

Plus précisément, pour inspecter de manière très efficace le joint 50, le procédé est mis en oeuvre en 5 passages ou balayages, à savoir :
i) passage axial centré et le long du joint 50, en mode TOFD, avec traducteurs C-C,
ii) passages décalés successivement à gauche puis à droite de l'axe du joint 50 (ou inversement), en mode TOFD, avec traducteurs A-A puis B-B
iii) passage à gauche du joint 50, en mode OLI, avec traducteur OL1, et
iv) passage à droite du joint, en mode OLI, avec traducteur OL2.

Les passages i) et ii) en mode TOFD se font avec des traducteurs A-A, B-B, C-C qui sont ici identiques ; les ondes étant envoyées sous un angle de 55° et à une fréquence de 7.5 MHz.

Les passages iii) et iv) en mode OLI se font avec des traducteurs OL1 et OL2 aussi identiques ; les ondes étant alors envoyées sous un angle de 76° et à une fréquence de 2 MHz (voir flèche F4).

Une telle séquence permet d'avoir une détection très efficace des fissures tant en longueur qu'en profondeur.

Toutefois, il serait possible d'effectuer moins de passages, par exemple un seul passage axial en mode TOFD (passage i)) et un ou deux passages en mode OLI.

Bien entendu, l'invention englobe toutes les variantes de réalisation et d'application respectant le principe ci-dessus, quels que soient notamment les détails constructifs du matériel de mise en oeuvre, par exemple au niveau de la structure de sa tringlerie, de la forme ou de la dimension des traducteurs. Par exemple, une focalisation électronique utilisant des traducteurs multi-éléments entrerait aussi dans le champ de l'invention.

## Revendications

1. Procédé de contrôle par ultrasons de joints (1, 50) soudés, plus particulièrement de joints soudés (1, 50) réunissant bout-à-bout deux pièces métalliques (2, 3 ; 51, 52), dans lequel on réalise le contrôle du joint (1, 50)
a) on déplace, en appliquant la technique "time of flight diffraction (TOFD)", dans le sens longitudinal ou circonférentiel, en un seul passage le long du joint soudé (1) à contrôler, au moins un couple formé d'un premier traducteur (5) et d'un deuxième traducteur (6), l'un émetteur et l'autre récepteur d'ondes ultrasonores, lesdits transducteurs (5, 6) étant positionnés latéralement de part et d'autre du joint (1) à contrôler, lesdits traducteurs (5, 6) comprenant des céramiques ou cristaux piézoélectriques, de manière à détecter tout défaut du joint (1, 50) situé à une épaisseur d'au moins 10 mm.
b) on déplace en un seul passage le long du joint soudé (1) à contrôler, en appliquant la technique de l'onde longitudinale inclinée ("OLI") qui est mise en oeuvre par insonification d'au moins une partie du joint (1, 50) à contrôler avec des ondes sonores longitudinales inclinées d'un angle (ß) compris entre 70° et 90° d'angle de réfraction, au moins un troisième traducteur (57, 53, 54, 55), de manière à détecter tout défaut du joint (1, 50) situé à une épaisseur comprise entre 0.5 mm et 15 mm.

2. Procédé selon la revendication 1, **caractérisé en ce qu'**à l'étape a), les premier et deuxième traducteurs (5, 6) comprennent des céramiques ou cristaux piézoélectriques de forme rectangulaire ou oblongue (24).

3. Procédé selon l'une des revendications 1 ou 2, **caractérisé en ce qu'**à l'étape a), les traducteurs ultrasonores (5, 6) ont une bande de fréquence supérieure à 60 % de la fréquence centrale et une fréquence comprise entre 1 et 20 MHz, de préférence entre 6 et 18 MHz.

4. Procédé selon l'une des revendications 1 à 3, **caractérisé en ce qu'**il comprend le décalage latéral (D) du couple de traducteurs ultrasonores (5, 6), par rapport au centre ou à l'axe du joint soudé (1, 50).

5. Procédé selon l'une des revendications 1 à 4, **caractérisé en ce qu'**à l'étape a), on détecte tout défaut du joint (1, 50) situé à une épaisseur entre 10 et 300 mm, de préférence encore de 10 à 60 mm.

6. Procédé selon la revendication 1, **caractérisé en ce qu'**à l'étape b), la technique "OLI" est mise en oeuvre par insonification d'au moins une partie du joint(1, 50) à contrôler avec des ondes sonores longitudinales inclinées d'un angle (β) d'environ 76° d'angle de réfraction, et/ou à une fréquence entre 1.5 et 4 MHz, en particulier de l'ordre de 2 MHz.

7. Procédé selon l'une des revendications 1 ou 6, **caractérisé en ce que** l'étape b), est opérée successivement de part et d'autre du joint (1, 50) soudé à contrôler.

8. Procédé selon l'une des revendications 1, 6 ou 7, **caractérisé en ce qu'**à l'étape b), on détecte tout défaut du joint (1, 50) situé à une épaisseur comprise entre 0.5 mm et 20 mm, de préférence de 0.5 mm à 10 mm.

9. Procédé selon l'une des revendications 1, 6 à 8, **caractérisé en ce qu'**à l'étape b), on utilise au moins un troisième traducteur (57, 53, 54, 55) comportant une céramique d'émission (53) d'ondes permettant d'émettre des ondes sonores en direction de la soudure (1, 50) et d'une céramique de réception (54) d'ondes ultra-sonores permettant de recevoir des ondes ultra-sonores.

10. Procédé selon l'une des revendications 1 à 9, **caractérisé en ce qu'**il comprend une phase d'étalonnage du ou des couples de traducteurs ultrasonores (5, 6), à partir d'une entaille d'étalonnage de profondeur déterminée, simulant une fissure, de préférence une entaille de longueur égale à environ 10 mm et de profondeur de l'ordre de 1 mm.

11. Procédé selon l'une des revendications 1 à 10, **caractérisé en ce qu'**il comprend au moins une étape d'analyse d'au moins un signal reçu par un ou chaque traducteur récepteur, au cours du balayage du joint soudé (1, 50), de manière à déceler tout défaut, notamment toute fissure (34), et préférentiellement d'en déterminer ou d'en évaluer la hauteur ou dimension.

12. Procédé selon l'une des revendications 1 à 11, **caractérisé en ce que** l'épaisseur (e) est comprise entre 5 mm et au moins 60 mm, et les pièces sont des parois d'équipements ou de composants fonctionnant sous pression, appartenant à des unités chimiques ou pétrochimiques, des centrales nucléaires ou analogues, des structures de machines volantes, des éléments ou pièces de machines tournantes, des canalisations, des rails de chemin de fer ou tout autre ensemble mécano-soudé.

13. Matériel pour la mise en oeuvre du procédé de contrôle de joints soudés selon l'une quelconque des revendications 1 à 12, **caractérisé en ce qu'**il comprend :
- au moins un couple formé d'un premier et d'un deuxième traducteurs (5, 6), l'un émetteur et l'autre récepteur d'ondes ultrasonores, lesdits traducteurs (5,6) étant positionnés latéralement de part et d'autre du joint(1) à contrôler et agencés de manière à pouvoir appliquer la technique TOFD par déplacement dans le sens longitudinal ou circonférentiel, le long du joint soudé à contrôler de manière à détecter tout défaut du joint (1, 50) situé à une épaisseur d'au moins 10 mm en un seul passage, les deux traducteurs (5, 6) utilisant des céramiques ou cristaux piézoélectriques (24), et les deux traducteurs (5, 6) étant reliés mécaniquement par un support commun (7) comprenant une tringlerie (16, 17) agencée pour permettre un réglage de l'écartement (E) entre ces deux traducteurs ultrasonores (5, 6), un montage pivotant (axes 19, 20) de chaque traducteur (5, 6), avec moyens de blocage (21, 22) dans une position angulaire choisie, et se trouvant aussi raccordés à une arrivée (15, 30 à 33) de liquide, en particulier d'eau, pour le couplage acoustique de ces traducteurs (5, 6) avec l'élément à contrôler (1, 2, 3),
- au moins un troisième traducteur (57, 53, 54, 55) agencé de manière à pouvoir appliquer la technique de l'onde longitudinale inclinée (« OLI ») qui est mise en oeuvre par insonification d'au moins une partie du joint (1, 50) à contrôler avec des ondes sonores longitudinales inclinées d'un angle (ß) compris entre 70° et 90° d'angle de réfraction et par déplacement le long du joint soudé (1) à contrôler, de manière à détecter tout défaut du joint (1, 50) situé à une épaisseur comprise entre 0,5 mm et 15 mm, et
- des moyens de traitement (8) des mesures, les traducteurs étant encore reliés auxdits moyens de traitement (8) des mesures.

14. Matériel selon la revendication 13, **caractérisé en ce que** le support commun (7) des deux traducteurs ultrasonores (5, 6) possède un montage permettant un décalage latéral (D) du couple de traducteurs (5, 6) par rapport au centre du joint soudé (1) à contrôler.

15. Matériel selon la revendication 13, **caractérisé en ce que** ledit troisième traducteur (57, 53, 54, 55) comporte une céramique d'émission (53) d'ondes permettant d'émettre des ondes sonores et d'une céramique de réception (54) d'ondes sonores permettant de recevoir des ondes sonores.

## Patentansprüche

1. Ultraschall-Prüfverfahren von Schweißverbindungen (1, 50), insbesondere von Schweißverbindungen (1, 50), die zwei Metallteile (2, 3; 51, 52) auf Stoß miteinander verbinden, wobei man die Prüfung der Verbindung (1, 50) folgendermaßen durchführt
a) man verfährt anhand des TOFD-Verfahrens (Time of Flight Diffraction) in Längsrichtung oder Umfangsrichtung in einem Durchgang entlang der zu prüfenden Schweißverbindung (1) zumindest ein Paar, das durch einen ersten Transduktor (5) und einen zweiten Transduktor (6) gebildet wird, der eine Sender und der andere Empfänger von Ultraschallwellen, wobei die besagten Transduktoren (5, 6) seitlich beiderseits der zu prüfenden Verbindung (1) positioniert sind, wobei die besagten Transduktoren (5, 6) piezoelektrische Keramiken oder Kristalle umfassen, um jeden Fehler der Verbindung (1, 50) zu erkennen, der sich in einer Stärke von mindestens 10 mm befindet.
b) man verfährt in einem Durchgang entlang der zu prüfenden Schweißverbindung (1) unter Anwendung der Technik der geneigten Longitudinalwelle ("OLI"), die durch Insonifizierung zumindest eines Teils der zu prüfenden Verbindung (1, 50) mit geneigten longitudinalen Schallwellen mit einem Winkel (β) zwischen 70° und 90° als Refraktionswinkel angewandt wird, zumindest einen dritten Transduktor (57, 53, 54, 55) um jeden Fehler der Verbindung (1, 50) zu erkennen, der sich in einer Stärke zwischen 0,5 mm und 15 mm befindet.

2. Verfahren nach Anspruch 1, **dadurch gekennzeichnet, dass** im Schritt a) der erste und der zweite Transduktor (5, 6) piezoelektrische Keramiken oder Kristalle in rechteckiger oder länglicher Form (24) umfasst.

3. Verfahren nach einem der Ansprüche 1 oder 2, **dadurch gekennzeichnet, dass** im Schritt a) der erste und der zweite Transduktor (5, 6) ein Frequenzband von über 60% der zentralen Frequenz und eine Frequenz zwischen 1 und 20 MHz, vorzugsweise zwischen 6 und 18 MHz aufweisen.

4. Verfahren nach einem der Ansprüche 1 bis 3, **dadurch gekennzeichnet, dass** es den seitlichen Versatz (D) des Ultraschall-Transduktorpaares (5, 6) im Verhältnis zur Mitte oder zur Achse der Schweißverbindung (1, 50) umfasst.

5. Verfahren nach einem der Ansprüche 1 bis 4, **dadurch gekennzeichnet, dass** man im Schritt a) jeden Fehler der Verbindung (1, 50) erfasst, der sich in einer Stärke zwischen 10 und 300 mm, vorzugsweise aber zwischen 10 und 60 mm befindet.

6. Verfahren nach Anspruch 1, **dadurch gekennzeichnet, dass** die "OLI" Technik im Schritt b) durch Insonifizierung zumindest eines Teils der zu prüfenden Verbindung (1, 50) mit geneigten longitudinalen Schallwellen mit einem Winkel (β) von etwa 76° als Refraktionswinkel angewandt wird, und/ oder mit einer Frequenz zwischen 1,5 und 4 MHz, im Speziellen in der Größenordnung von 2 MHz.

7. Verfahren nach einem der Ansprüche 1 bis 6, **dadurch gekennzeichnet, dass** der Schritt b) nacheinander beiderseits der zu prüfenden Schweißverbindung (1, 50) ausgeführt wird.

8. Verfahren nach einem der Ansprüche 1, 6 oder 7, **dadurch gekennzeichnet, dass** man im Schritt b) jeden Fehler der Verbindung (1, 50) erfasst, der sich in einer Stärke zwischen 0,5 mm und 20 mm, vorzugsweise zwischen 0,5 mm und 10 mm befindet.

9. Verfahren nach einem der Ansprüche 1, 6 bis 8, **dadurch gekennzeichnet, dass** man im Schritt b) zumindest einen dritten Transduktor (57, 53, 54, 55) verwendet, der eine Schallemissionskeramik (53) umfasst, mit der man Schallwellen in Richtung der Schweißnaht (1, 50) aussenden kann, und eine Empfangskeramik (54) für Ultraschallwellen, mit der man Ultraschallwellen empfangen kann.

10. Verfahren nach einem der Ansprüche 1 bis 9, **dadurch gekennzeichnet, dass** es eine Eichphase des oder der Paare an Ultraschall-Transduktoren (5, 6) ausgehend von einer Eichkerbe mit einer bestimmten Tiefe umfasst, die einen Riss simuliert, und vorzugsweise eine Kerbe in einer Länge von etwa 10 mm und einer Tiefe in der Größenordnung von 1 mm.

11. Verfahren nach einem der Ansprüche 1 bis 10, **dadurch gekennzeichnet, dass** es zumindest einen Analyseschritt zumindest eines Signals umfasst, das durch einen oder jeden Empfangstransduktor im Laufe des Abfahrens der Schweißverbindung (1, 50) empfangen wird, um jeden Fehler, vor allem jeden Riss (34) zu erkennen, und vorzugsweise um dessen Höhe oder Abmessung zu bestimmen oder zu bewerten.

12. Verfahren nach einem der Ansprüche 1 bis 11, **dadurch gekennzeichnet, dass** die Stärke (e) zwischen 5 mm und zumindest 60 mm liegt und die Teile Wände von Ausrüstungen oder Komponenten sind, die unter Druck arbeiten, und chemischen oder petrochemischen Einheiten, Atomkraftwerken oder ähnlichem, Strukturen von Flugmaschinen, Elementen oder Teilen von Rotationsmaschinen, Kanalisationen, Eisenbahnschienen oder anderen verschweißten Baugruppen angehören.

13. Gerät zum Anwenden des Ultraschall-Prüfverfahrens von Schweißverbindungen nach irgendeinem der Ansprüche 1 bis 12, **dadurch gekennzeichnet, dass** es folgendes umfasst:
- zumindest ein Paar, das aus einem ersten und einem zweiten Transduktor (5, 6), der eine Sender und der andere Empfänger von Ultraschallwellen, wobei die besagten Transduktoren (5, 6) seitlich beiderseits der zu prüfenden Verbindung (1) positioniert sind, und die angeordnet sind, um die TOFD Technik durch Verfahren in Längsrichtung oder Umfangsrichtung entlang der zu prüfenden Schweißverbindung anwenden zu können, um jeden Fehler der Verbindung (1, 50) in einem Durchgang zu erkennen, der sich in einer Stärke von mindestens 10 mm befindet, wobei die beiden Transduktoren (5, 6) piezoelektrische Keramiken oder Kristalle (24) verwenden und die beiden Transduktoren (5, 6) mechanisch durch eine gemeinsame Halterung (7) verbunden sind, die ein Gestänge (16, 17) umfasst, das angeordnet ist, um eine Einstellung des Abstandes (E) zwischen diesen beiden Transduktoren (5, 6) zu ermöglichen, eine schwenkbare Montage (Achsen 19, 20) eines jeden Transduktors (5, 6), mit Mitteln zum Blockieren (21, 22) in einer gewählten Winkelposition, und auch an eine Flüssigkeitszuführung (15, 30 bis 33), im Speziellen Wasser, angeschlossen sind, zur akustischen Kopplung dieser Transduktoren (5, 6) mit dem zu prüfenden Element (1, 2, 3),
- zumindest einen dritten Transduktor (57, 53, 54, 55), der angeordnet ist, um die Technik der geneigten Longitudinalwelle ("OLI") anwenden zu können, die durch Insonifizierung zumindest eines Teils der zu prüfenden Verbindung (1, 50) mit geneigten longitudinalen Schallwellen mit einem Winkel (β) zwischen 70° und 90° als Refraktionswinkel angewandt wird, und durch Verfahren entlang der zu prüfenden Schweißverbindung (1), um jeden Fehler der Verbindung (1, 50) zu erfassen, der sich in einer Stärke zwischen 0,5 mm und 15 mm befindet, und
- Mittel zum Bearbeiten (8) der Messwerte, wobei die Transduktoren noch mit den besagten Bearbeitungsmitteln (8) der Messwerte verbunden sind.

14. Gerät nach Anspruch 13, **dadurch gekennzeichnet, dass** die gemeinsame Halterung (7) der beiden Ultraschall-Transduktoren (5, 6) eine Montage umfasst, die einen seitlichen Versatz (D) des Transduktorpaares (5, 6) im Verhältnis zur Mitte der zu prüfenden Schweißverbindung (1) ermöglicht.

15. Gerät nach Anspruch 13, **dadurch gekennzeichnet, dass** der besagte dritte Transduktor (57, 53, 54, 55) eine Sendekeramik (53) von Wellen umfasst, die es ermöglicht, Schallwellen auszusenden und eine Keramik zum Empfangen (54) von Schallwellen, die den Empfang von Schallwellen ermöglicht.

## Claims

1. Method for controlling welded joints (1, 50) using ultrasound, more particularly welded joints (1, 50) connecting two abutted metal parts (2, 3; 51, 52), wherein the control of the joint (1, 50) is carried out
a) is moved, by applying the Time of Flight Differential Technique ("TOFD"), in the longitudinal or circumferential direction, in a single pass along the welded joint (1) to be controlled, at least one pair formed by a first translator (5) and by a second translator (6), one transmitter and one receiver of ultrasonic wave, said translators (5, 6) being positioned laterally on either side of the joint (1) to be controlled, said translators (5, 6) comprising piezoelectric ceramics or crystals, so as to detect any flaw in the joint (1, 50) located at a thickness of at least 10 mm.
b) is moved in a single pass along the weld joint (1) to be controlled, by applying the inclined longitudinal wave ("OLI") technique which is implemented by insonification of at least one portion of the joint (1, 50) to be controlled with longitudinal sound waves inclined by an angle (β) between 70° and 90° of an angle of refraction, at least one third translator (57, 53, 54, 55), in such a way as to detect any defect in the joint (1, 50) located at a thickness of between 0.5 mm and 15 mm.

2. Method according to claim 1, **characterised in that** in the step a), the first and second translators (5, 6) comprise piezoelectric ceramics or crystals of rectangular or oblong shape (24).

3. Method according to one of claims 1 or 2, **characterised in that** in step a), the ultrasonic translators (5, 6) have a frequency band higher than 60% of the centre frequency and a frequency between 1 and 20 MHz, preferably between 6 and 18 MHz.

4. Method according to one of claims 1 to 3, **characterised in that** it comprises the lateral offset (D) of the pair of ultrasonic translators (5, 6), with respect to the centre or to the axis of the weld joint (1, 50).

5. Method according to one of claims 1 to 4, **characterised in that** in step a), any flaw in the joint (1, 50) is detected located at a thickness between 10 and 300 mm, preferably between 10 and 60 mm.

6. Method according to claim 1, **characterised in that** in step b), the "OLI" technique is implemented by insonifying at least one portion of the joint (1, 50) to be controlled with longitudinal sound waves inclined at an angle (β) of about 76° of angle of refraction, and/or at a frequency between 1.5 and 4 MHz, in particular about 2 MHz.

7. Method according to one of claims 1 or 6, **characterised in that** step b) is carried out in succession on each side of the weld joint (1, 50) to be controlled.

8. Method according to one of claims 1, 6 or 7, **characterised in that** in step b), any defect of the joint is detected (1, 50) located at a thickness between 0.5 mm and 20 mm, preferably from 0.5 mm to 10 mm.

9. Method according to one of claims 1, 6 to 8, **characterised in that** in step b), at least one third translator (57, 53, 54, 55) is used comprising a wave transmitting ceramic (53) making it possible to emit sound waves in the direction of the weld (1, 50) and an ultrasound wave receiving ceramic (54) making it possible to receive ultrasonic waves.

10. Method according to one of claims 1 to 9, **characterised in that** it comprises a calibration phase of the pair or pairs of ultrasonic translators (5, 6), from a calibration notch with a determined depth, simulating a crack, preferably a notch with a length equal to 10 mm and a depth of about 1 mm.

11. Method according to one of claims 1 to 10, **characterised in that** it comprises at least one step of analysing at least one signal received by one or each receiving translator, during scanning of the weld joint (1, 50), so as to detect any flaw, in particular any crack (34), and preferably to determine or evaluate the height or dimension thereof.

12. Method according to one of claims 1 to 11, **characterised in that** the thickness (e) is between 5 mm and at least 60 mm, and the parts are walls of equipment or components that operate under pressure, belonging to chemical or petrochemical units, nuclear power plants or similar, flying machines structures, elements or parts of rotating machines, pipes, railroad rails or any other mechanically-welded unit.

13. Equipment for the implementation of the method of controlling weld joints according to any one of claims 1 to 12, **characterised in that** it comprises:
- at least one pair formed from a first and second translators (5, 6), one transmitter and the other a receiver of ultrasonic wave receiver, said translators (5, 6) being positioned laterally on either side of the joint (1) to be controlled and arranged in such a way as to be able to apply the TOFD technique by displacement in the longitudinal or circumferential direction, along the weld joint to be controlled in such a way as to detect any flaw of the joint (1, 50) located at a thickness of at least 10 mm in a single pass, with the two translators (5, 6) using piezoelectric ceramics or crystals (24), and the two translators (5, 6) being mechanically connected by a common support (7) comprising a linkage (16, 17) arranged to enable adjustment of the spacing (E) between these two ultrasonic translators (5, 6), a pivot mounting (axes 19, 20) of each translator (5, 6), with locking means (21, 22) in a selected angular position, and also being connected to an inlet (15, 30 to 33) of liquid, in particular of water, for the acoustic coupling of these translators (5, 6) with the element to be controlled (1, 2, 3),
- at least one third translator (57, 53, 54, 55) arranged in such a way as to be able to apply the inclined longitudinal wave ("OLI") technique which is implemented by insonification of at least one portion of the joint (1, 50) to be controlled with longitudinal sound waves inclined by an angle (β) between 70° and 90° of an angle of refraction and by displacement along the weld joint (1) to be controlled, in such a way as to detect any flaw of the joint (1, 50) located at a thickness between 0.5 mm and 15 mm, and
- means for processing (8) measurements, with the translators still being connected to said means of processing (8) measurements.

14. Equipment according to claim 13, **characterised in that** the common support (7) of the two ultrasonic translators (5, 6) has an assembly allowing for an lateral offset (D) of the pair of translators (5,6) with respect to the centre of the weld joint (1) to be controlled.

15. Equipment according to claim 13, **characterised in that** said third translator (57, 53, 54, 55) comprises a wave transmitting ceramic (53) making it possible to emit sound waves and a sound wave receiving ceramic (54) making it possible to receive sound waves.
